# EUROPÄISCHE PATENTSCHRIFT

(11) **EP 3 123 598 B1**
(45) Veröffentlichungstag und Bekanntmachung des Hinweises auf die Patenterteilung: **03.04.2019**
(21) Anmeldenummer: 15719186.7
(22) Anmeldetag: 22.04.2015
(51) Int. Cl.: H02K 5/06, B22D 19/00, B22D 19/04, H02K 15/14, H02K 5/18

(54) **SEGMENTIERTES BAUTEIL MIT EINEM ERSTEN FORMTEIL**
SEGMENTED COMPONENT WITH A FIRST SHAPED PART
ÉLÉMENT SEGMENTÉ COMPRENANT UNE PREMIÈRE PIÈCE MOULÉE

(30) Priorität: 09.05.2014 EP 14167729
(43) Veröffentlichungstag der Anmeldung: 01.02.2017
(73) Patentinhaber: Siemens Aktiengesellschaft, 80333 München (DE)
(72) Erfinder: WÖHNER, Norbert, 97618 Heustreu (DE)
(86) Internationale Anmeldenummer: PCT/EP2015/058710
(87) Internationale Veröffentlichungsnummer: WO 2015/169598

(56) Entgegenhaltungen:
- DE-A1-102008 017 977
- DE-A1-102009 035 326
- US-A1- 2002 007 928
- US-A1- 2004 012 284

## Beschreibung

Die Erfindung betrifft ein segmentiertes Bauteil gemäß dem Oberbegriff des Patentanspruchs 1, und eine Maschine, insbesondere eine elektrische Maschine, die das segmentierten Bauteil umfasst. Ferner betrifft die Erfindung ein Verfahren zur Herstellung des segmentierten Bauteils, sowie eine Verwendung des Formteils für das segmentierte Bauteil.

Ein segmentiertes Bauteil ist aus der US 2004/0012284 A1 in der Gestalt eines segmentiertes Maschinengehäuse bekannt. Dort wird festgestellt, dass Gehäuse aus einem gegossenen oder geschmiedeten Metall in den Wandbereichen des Gehäuses kleine Einschlüsse oder Defekte aufweisen können, deren Behebung ein zeitaufwändiger und teurer Prozess ist. Zusätzlich treten beim Gießen Schwierigkeiten auf, wenn tiefe Löcher mit einem konstanten Querschnitt mit genauen Abmessungen hergestellt werden sollen. In solchen Fällen kann es notwendig sein, weitere Bearbeitungsvorgänge durchzuführen, um eine ausreichend hohe Genauigkeit der Abmessungen zu erreichen. Um solche Probleme zu überwinden, werden einige Motorgehäuse durch Strangpressen hergestellt. Beim Strangpressen wird ein Block aus einer Aluminiumlegierung oder einem anderen Metall durch eine Matrize mit einer festgelegten Größe und Gestalt gepresst. Das Strangpressen hat eine bessere Genauigkeit in den Abmessungen als gewöhnliche Gießprozesse, jedoch weist die Herstellung durch Strangpressen Beschränkungen auf, unter denen es schwierig ist, ein hohles Strangpressteil mit einem großen Durchmesser herzustellen. In der US 2004/0012284 A1 wird daher vorgeschlagen, eine Vielzahl von Segmenten mit in einer Längsrichtung verlaufenden Kühlkanälen durch Strangpressen, Gießen oder Schmieden herzustellen und diese zu einem Gehäuse mit einem großen inneren Durchmesser durch mechanisches Verbinden, durch eine Schweißnaht oder durch einen geeigneten Klebstoff zu verbinden.

In der US 2004/0012284 A1 wird ein segmentierte Bauteil für ein Gehäuse einer elektrischen Maschine verwendet. Die elektrische Maschine umfasst einen Stator, der an einer Innenseite des Gehäuses befestigt ist. In der genannten Veröffentlichung ist das segmentierte Bauteil typischerweise ein Teil eines Gehäuses, das ein oder mehrere Lager fixiert und stützt, die die Welle aufnehmen und den Rotor in seiner Lage innerhalb des Stators stützen, wobei die elektrische Maschine außerdem Lagerschilde an jedem Ende des segmentierten Bauteils aufweist, die mit Hilfe der Lager die Welle zentrieren und fixieren.

Die US 2002/0007928 offenbart in der Fig.2 ein Verbindungsstück (3), welches an ein festes Bauteil (1) angegossen wurde.

Aufgrund der dargelegten Unzulänglichkeiten liegt daher der Erfindung die Aufgabe zugrunde, einen technischen Beitrag zu leisten, mit dem ein segmentiertes Bauteil kostengünstig in hoher Qualität zur Verfügung gestellt werden kann.

Die Aufgabe wird durch ein segmentiertes Bauteil mit den Merkmalen des Anspruchs 1 gelöst.

Ein erfindungsgemäßes segmentiertes Bauteil umfasst
- ein erstes Segment und ein zweites Segment,
- wobei das segmentierte Bauteil ein erstes Formteil aufweist, das sich in der axialen Richtung erstreckt,
- wobei das erste Segment einen ersten gegossenen Metallbereich aufweist,
- wobei das zweite Segment einen zweiten gegossenen Metallbereich aufweist,
- wobei der erste gegossene Metallbereich mit dem ersten Formteil durch eine erste Verbindungszone und das erste Formteil mit dem zweiten gegossenen Metallbereich durch eine zweite Verbindungszone stoffschlüssig verbunden sind.

Die Aufgabe wird auch durch ein Verfahren zur Herstellung mit den Merkmalen nach Anspruch 15 gelöst.

Ferner wird die Aufgabe auch durch eine Verwendung eines Formteils mit den Merkmalen nach Anspruch 16 gelöst.

Die Aufgabe wird erfindungsgemäß vorteilhaft gelöst, indem durch das stoffschlüssige Verbinden des ersten Segments mit dem ersten Formteil durch die erste Verbindungszone und das stoffschlüssige Verbinden des ersten Formteils mit dem zweiten gegossenen Metallbereich durch die zweite Verbindungszone ein segmentiertes Bauteil kostengünstig in hoher Qualität zur Verfügung gestellt werden kann. Vorteilhaft können der erste und der zweite gegossene Metallbereich aufgrund ihrer im Vergleich zu dem segmentierten Bauteil kleineren Größe kostengünstig mit einem geringeren Material- und Herstellungsaufwand in hoher Qualität durch Gießen hergestellt werden und kostengünstig in hoher Qualität mit einem kostengünstig herstellbaren Formteil stoffschlüssig verbunden werden. Der Materialaufwand ist beispielsweise vorteilhaft gering, weil die geringere Größe der gegossenen Metallbereiche zu geringeren Kosten bei der Herstellung der Gussformen führt. Der Herstellungsaufwand ist beispielsweise deshalb vorteilhaft gering, weil an Verbindungsstellen zwischen dem ersten und dem zweiten Segment durch Gießen kostengünstig hergestellte Metallbereiche für ein kostengünstiges Verbinden der beiden Segmente in hoher Qualität ausreichend sind.

Der erste gegossene Metallbereich und gegebenenfalls ein oder mehrere weitere an einem erfindungsgemäßen Erzeugnis vorteilhaft vorhandene gegossene Metallbereiche können vorteilhaft kostengünstig in einer hohen Qualität durch Druckgießen hergestellt werden. Dies ist unter anderem deshalb vorteilhaft, da die gegossenen Metallbereiche bei erfindungsgemäßen Erzeugnissen im Vergleich zu einem erfindungsgemäßen segmentierten Bauteils eine kleinere Größe aufweisen können und damit die Herstellung mit Druckgießen kostengünstig realisierbar wird. Durch die vorteilhafte Realisierbarkeit der Herstellung durch Druckgießen kann eine vorteilhaft hohe Qualität, z.B. in den Abmessungen, eines segmentierten Bauteils erreicht werden.

Das erste Segment kann überwiegend aus dem ersten gegossenen Metallbereich bestehen. So kann vorteilhaft kostengünstig das erste Segment in einem Stück gegossen werden.

Das zweite Segment kann überwiegend aus dem zweiten gegossenen Metallbereich bestehen. So kann vorteilhaft kostengünstig das zweite Segment in einem Stück gegossen werden.

Das erste Formteil kann ein feineres Gefüge aufweisen als der erste gegossene Metallbereich. So kann vorteilhaft kostengünstig das erste Formteil als ein vorgefertigtes Teil mit einem anderen Verfahren unter Verwendung eines Umformverfahrens hergestellt werden und für erfindungsgemäße Erzeugnisse und Verfahren zur Verfügung gestellt bzw. verwendet werden. Bei erfindungsgemäßen Erzeugnissen können z.B. der erste und der zweite gegossene Metallbereich durch das Gießen Poren oder Lunker aufweisen. Das feinere Gefüge des ersten Formteils kann aufgrund seiner Herstellung mit dem anderen Verfahren Poren mit geringerer Größe aufweisen.

Das Formteil kann überwiegend aus einem Material bestehen. So kann vorteilhaft und kostengünstig ein Stück des Materials als Ausgangspunkt für eine Herstellung des ersten Formteils verwendet werden, da das Stück überwiegend das Volumen des ersten Formteils ausfüllt. Es müssen so vorteilhaft keine oder nur geringe Mengen an weiteren Materialien an das erste Formteil angebracht werden. Geringe Mengen an Materialien können z.B. bei der Herstellung des ersten Formteils durch ein Beschichten der Oberfläche des ersten Formteils mit einem weiteren Material angebracht werden.

Eine Querschnittsebene ist durch eine erste radiale Richtung und eine zweite radiale Richtung aufgespannt, wobei eine axiale Richtung senkrecht zu der Querschnittsebene verläuft. Ein dreidimensionaler Gegenstand, der sich in der axialen Richtung erstreckt, hat viele Querschnittsebenen (theoretisch unendlich viele), die entlang der axialen Richtung parallel zueinander angeordnet sind und in denen der dreidimensionale Gegenstand unterschiedlich ausgebildet sein kann. So können sich z.B. das erste Segment, das zweite Segment und das erste Formteil in der axialen Richtung erstrecken, die senkrecht zu einer Querschnittsebene des segmentierten Bauteils verläuft. Eine bestimmte Querschnittsebene hat eine bestimmte axiale Position, die durch eine axiale Koordinate eines Koordinatensystems angegeben werden kann, die den Abstand der bestimmten Position in axialer Richtung vom Ursprung des Koordinatensystems angibt.

Es kann z.B. ein zeitlicher Abstand zwischen dem Herstellen des ersten Segments mit dem ersten Formteil und einem Herstellen einer stoffschlüssigen Verbindung von diesem Formteil mit dem zweiten Segment liegen, ohne dass eine freiliegende Oberfläche an dem ersten Ende des ersten Segments mit dem ersten Formteil erheblich schlechtere Verbindungseigenschaften aufweist, als bei einem sofortigen Herstellen dieser stoffschlüssigen Verbindung mit dem zweiten Segment. Das erste Segment mit dem ersten Formteil kann eine weitere Verbindungstelle zum Verbinden mit weiteren Segmenten aufweisen. Vorteilhaft kann das erste Segment mit dem ersten Formteil neben dem ersten Formteil zum Verbinden mit dem zweiten Segment an allen weiteren Verbindungsstellen zu weiteren Segmenten jeweils ein weiteres Formteil aufweisen, das erfindungsgemäß durch eine Verbindungszone stoffschlüssig mit einem gegossenen Metallbereich des entsprechenden Segments mit einem Formteil verbunden ist. So kann z.B. ein zeitlicher Abstand zwischen dem Herstellen des ersten Segments mit dem ersten Formteil und dem Herstellen der stoffschlüssigen Verbindungen an allen Verbindungsstellen zu Segmenten liegen, ohne dass eine freiliegende Oberfläche an dem ersten Ende des ersten Segments mit dem ersten Formteil erheblich schlechtere Verbindungseigenschaften aufweist, als bei einem sofortigen Herstellen dieser stoffschlüssigen Verbindungen mit den Segmenten.

Das Formteil kann vorteilhaft für ein erfindungsgemäßes segmentiertes Bauteil erfindungsgemäß verwendet werden. Weiterhin vorteilhaft kann das Formteil kostengünstig in hoher Qualität unabhängig von einer Fertigung des segmentierten Bauteils vorgefertigt werden. Die vorgefertigten Formteile können vorteilhaft kostengünstig gelagert werden und zu einem kostengünstigen Zeitpunkt für eine Herstellung eines erfindungsgemäßen segmentierten Bauteils verwendet werden.

Eine erfindungsgemäße Maschine weist auch den weiteren Vorteil auf, dass der Stator vorteilhaft kostengünstig in einer hohen Qualität in dem segmentierten Bauteil über eine reibschlüssige Verbindung zwischen mindestens einer Fläche am Umfang des Stators und einer Innenfläche des segmentierten Bauteils für einen Betrieb der Maschine reibschlüssig fixiert werden kann. Vorteilhaft kann die Maschine ein Gehäuse aufweisen, das das segmentierte Bauteil umfasst.

Bei einem Betrieb einer erfindungsgemäßen Maschine wird der Rotor in Drehung um eine Drehachse versetzt und es kann an einer Welle, an der der Rotor befestigt ist, mechanische Energie an einen mechanischen Verbraucher in Form einer Drehbewegung abgegeben werden. Die dabei auftretenden Kräfte führen zu Gegenkräften in dem Stator, der im segmentierten Bauteil fixiert ist.

Bei einem Betrieb einer erfindungsgemäßen Maschine kann auch der Maschine mechanische Energie über die Welle zugeführt werden, die auch zu entsprechenden Gegenkräften am Stator führt.

Bei einer erfindungsgemäßen Maschine kann die Welle mithilfe einer ersten Lagervorrichtung in einem ersten Lagerschild und mithilfe einer zweiten Lagervorrichtung in einem zweiten Lagerschild gelagert sein.

Ein erfindungsgemäßes Verfahren zur Herstellung eines segmentierten Bauteils weist auch den weiteren Vorteil auf, dass bei dem Verfahren auf zusätzliche kostenintensive Arbeitsgänge verzichtet werden kann. Kostenintensive Arbeitsgänge sind z.B. Schweißen oder Kleben von Teilen des segmentierten Bauteils oder das Anbringen von weiteren unterschiedlich geformten Anbauten an das segmentierte Bauteil.

Vorteilhafte Ausgestaltungen der Erfindung sind in den abhängigen Ansprüchen angegeben.

So ist eine Ausgestaltung eines erfindungsgemäßen segmentierten Bauteils vorteilhaft, bei dem der erste gegossene Metallbereich aus einem ersten Material, insbesondere durch Druckgießen, gegossen ist und in der ersten Verbindungszone das erste Formteil durch das erste Material angeschmolzen ist. So kann vorteilhaft kostengünstig in einer hohen Qualität die erste Verbindungszone zusammen mit dem ersten gegossenen Metallbereich hergestellt werden.

In einer weiteren vorteilhaften Ausgestaltung eines erfindungsgemäßen segmentierten Bauteils weist das erste Formteil ein zweites Material auf und weist die erste Verbindungszone eine Legierung auf, wobei die Legierung das erste und das zweite Material aufweist. So kann vorteilhaft kostengünstig in einer hohen Qualität das erste Formteil vorteilhaft fest mit dem ersten gegossenen Metallbereich verbunden werden.

In einer weiteren vorteilhaften Ausgestaltung eines erfindungsgemäßen segmentierten Bauteils weist das erste Formteil in einem der ersten Verbindungszone benachbarten Bereich ein drittes Material auf. So kann vorteilhaft kostengünstig in einer hohen Qualität das erste Formteil durch ein Aufschmelzen einer Beschichtung an einer Oberfläche des ersten Formteils vorteilhaft fest mit dem ersten gegossenen Metallbereich verbunden werden. Das Formteil für diese Ausgestaltung weist die Beschichtung auf. Dabei ist das weitere Material für das Beschichten der Oberfläche des Formteils das zweite Material und das Material, aus dem das Formteil überwiegend besteht, ist das dritte Material. Die Beschichtung kann vorteilhaft und kostengünstig in einer hohen Qualität eine freiliegende Oberfläche des Formteils vorteilhaft bedecken. Dementsprechend vorteilhaft ist eine Ausgestaltung eines erfindungsgemäßen Segments mit einem Formteil, wobei das Formteil ein beschichtetes erstes Formteil aufweist. Dementsprechend vorteilhaft ist auch eine Ausgestaltung eines der Segmente des segmentierten Bauteils mit einem Formteil, das neben dem beschichteten ersten Formteil zum Verbinden mit dem zweiten Segment an allen weiteren Verbindungsstellen zu weiteren Segmenten jeweils ein beschichtetes weiteres Formteil aufweist.

Bei der Herstellung des Formteils können die Beschichtungsverfahren verwendet werden, mit denen in der Patentanmeldung mit der Veröffentlichungsnummer EP 2396872 A1 Leiter eines zweiten Materials an ihrer Oberfläche mit einer Beschichtung versehen werden.

Es kann vorteilhaft kostengünstig dasselbe Beschichtungsverfahren in einer hohen Qualität für die Leiter eines Käfigläufers und für die Formteile des erfindungsgemäßen segmentierten Bauteils für eine erfindungsgemäße elektrische Maschine verwendet werden.

Hinsichtlich einer elektrischen Maschine mit einem Käfigläufer, den dafür verwendeten beschichteten Leitern, sowie die Art und Weise, wie die Beschichtung auf den Leitern angebracht wird, und den damit verbundenen Beschichtungsverfahren und wird auf die Veröffentlichung mit der Nummer EP 2396872 A1 hingewiesen.

In einer weiteren vorteilhaften Ausgestaltung eines erfindungsgemäßen segmentierten Bauteils ist zwischen dem ersten gegossenen Metallbereich und dem ersten Formteil entlang eines Abschnitts der ersten Verbindungszone ein Formschluss vorhanden. So können vorteilhaft kostengünstig in einer hohen Qualität größere Kräfte zwischen dem ersten Segment und dem ersten Formteil aufgenommen werden, ohne dass die Verbindung zwischen dem ersten Segment und dem ersten Formteil zerstört wird. Vorteilhaft wird ein Teil der zwischen dem ersten Segment und dem ersten Formteil wirkenden Kräfte durch den Formschluss aufgenommen, so dass die stoffschlüssige Verbindung der ersten Verbindungszone vorteilhaft nur einen Teil der Kräfte aufnehmen muss.

Der Abschnitt mit dem Formschluss kann sich mindestens entlang der halben Länge der ersten Verbindungszone erstrecken, wobei die Länge der ersten Verbindungszone entlang einer Übergangsfläche des ersten Formteils auf einer dem ersten gegossenen Metallbereich zugewandten Seite in der Querschnittsebene gemessen ist. So können vorteilhaft kostengünstig in einer hohen Qualität die auf den Formschluss wirkenden Kräfte in große Kompressionskräfte umgewandelt werden, die vorteilhaft innerhalb des ersten Materials des ersten gegossenen Metallbereichs und innerhalb des Materials des ersten Formteils wirken, aus dem das erste Formteil überwiegend besteht. Hierzu kann der Formschluss vorteilhaft kostengünstig in einer hohen Qualität eine schwalbenschwanzförmige Nut in dem ersten gegossenen Metallbereich oder in dem ersten Formteil aufweisen.

In einer weiteren vorteilhaften Ausgestaltung eines erfindungsgemäßen segmentierten Bauteils weist das erste Formteil eine Struktur zur Vergrößerung einer Übergangsfläche auf einer dem ersten gegossenen Metallbereich zugewandten Seite auf. So können vorteilhaft kostengünstig in einer hohen Qualität größere Kräfte zwischen dem ersten Segment und dem ersten Formteil aufgenommen werden, da diese auf eine größere Fläche der ersten Verbindungszone des ersten Formteils aufgeteilt werden, die sich an die Übergangsfläche des ersten Formteils anschließt. Hierzu kann die Struktur zur Vergrößerung einer Übergangsfläche vorteilhaft eine einfach herzustellende Rillenstruktur sein.

Erfindungsgemäß gibt das segmentierte Bauteil durch das erste Segment, das erste Formteil, das zweite Segment und mindestens ein weiteres Element eine Erstreckung eines Innenraums eines Gehäuses in einer Querschnittsebene des Gehäuses vor, wobei das weitere Element durch eine dritte Verbindungszone mit dem zweiten Segment stoffschlüssig verbunden ist und durch eine vierte Verbindungszone mit dem ersten Segment stoffschlüssig verbunden ist. So können vorteilhaft und kostengünstig in einer hohen Qualität mit einer kleinen Gussform zwei offene Enden des segmentierten Bauteils durch Gießen eines gegossenen Metallbereichs stoffschlüssig verbunden werden. Wenn das mindestens eine weitere Element genau ein weiteres Element ist, dann besteht dieses aus einem zweiten Formteil, das wie das erste Formteil des erfindungsgemäßen segmentierten Bauteils ausgestaltet ist. Wenn das mindestens eine weitere Element aus mehreren weiteren Elementen besteht, dann besteht dieses entweder aus einem der Segmente des erfindungsgemäßen segmentierten Bauteils mit einem ersten und einem zweiten Formteil, oder aus einem weiteren segmentierten Bauteil mit zwei weiteren Formteilen, wobei eines der weiteren Formteile durch die vierte Verbindungszone mit dem ersten Segment stoffschlüssig verbunden ist und das zweite der weiteren Formteile durch die dritte Verbindungszone mit dem zweiten Segment stoffschlüssig verbunden ist, wobei das weitere segmentierte Bauteil sowie die weiteren Formteile wie das erste oder zweite Segment bzw. wie das erste Formteil ausgestaltet sind. Dabei ist eines dieser weiteren Formteile durch eine fünfte Verbindungszone mit einem weiteren Segment an einem ersten Ende des weiteren erfindungsgemäßen segmentierten Bauteils stoffschlüssig verbunden und das zweite dieser weiteren Formteile durch eine sechste Verbindungszone mit einem weiteren Segment an einem zweiten Ende des weiteren erfindungsgemäßen segmentierten Bauteils stoffschlüssig verbunden. Das erste Ende und das zweite Ende bezieht sich dabei auf eine Erstreckung des weiteren erfindungsgemäßen segmentierten Bauteils in einer Querschnittsebene des weiteren erfindungsgemäßen segmentierten Bauteils.

In einer weiteren vorteilhaften Ausgestaltung eines erfindungsgemäßen segmentierten Bauteils legen das erste und das zweite Segment die Form des segmentierten Bauteils in der Querschnittsebene zwischen einem ersten Ende und einem zweiten Ende des segmentierten Bauteils fest. So kann vorteilhaft kostengünstig in einer hohen Qualität ein Formteil, wie das erste Formteil, zur Herstellung verschieden gestalteter segmentierter Bauteile verwendet werden. Es können die Formteile dabei immer dieselbe Gestalt und dieselben Abmessungen aufweisen und vorteilhaft in großen Stückzahlen in einem Fertigungsprozess hergestellt werden. Vorteilhaft können unterschiedliche Längen der segmentierten Bauteile in der axialen Richtung mit denselben Formteilen gefertigt werden, da hierfür die Formteile in einfacher Weise kostengünstig in ihrer Länge entsprechend gekürzt werden können.

In einer weiteren vorteilhaften Ausgestaltung eines erfindungsgemäßen segmentierten Bauteils sind in der Querschnittsebene des segmentierten Bauteils Kräfte zwischen dem ersten und dem zweiten Segment überwiegend von dem ersten gegossenen Metallbereich aufnehmbar. So kann vorteilhaft kostengünstig in einer hohen Qualität eine kraftübertragende Verbindung zwischen dem ersten und dem zweiten Segment durch Gießen des ersten gegossenen Metallbereichs hergestellt werden.

In einer weiteren vorteilhaften Ausgestaltung eines erfindungsgemäßen segmentierten Bauteils sind in der Querschnittsebene des segmentierten Bauteils Kräfte zwischen dem ersten und dem zweiten Segment überwiegend von dem ersten Formteil aufnehmbar. So kann vorteilhaft kostengünstig in einer hohen Qualität eine hohe kraftübertragende Verbindung zwischen dem ersten und dem zweiten Segment über das erste Formteil durch die erste und zweite Verbindungszone stoffschlüssig hergestellt werden.

Es kann das erste Segment nur über das Formteil mit dem zweiten Segment verbunden sein. So kann vorteilhaft kostengünstig in einer hohen Qualität eine kräfteübertragende Verbindungseigenschaft zwischen dem ersten und dem zweiten Segment eingestellt werden.

Es können der erste und der zweite gegossene Metallbereich das erste Formteil überdecken. So kann vorteilhaft kostengünstig in einer hohen Qualität das Formteil geschützt werden.

In der bisherigen Beschreibung der vorteilhaften Ausgestaltungen eines erfindungsgemäßen segmentierten Bauteils wurde bei den Ausgestaltungen der Teil des segmentierten Bauteils beschrieben, der das erste Segment und die erste Verbindungszone und dessen/deren Umgebung betrifft. Dementsprechend beschreiben die vorteilhaften Ausgestaltungen des segmentierten Bauteils auch vorteilhafte Ausgestaltungen eines der Segmente des erfindungsgemäßen segmentierten Bauteils mit einem Formteil.

Des Weiteren kann ein segmentiertes Bauteil kostengünstig in hoher Qualität zur Verfügung gestellt werden, wenn der zweite gegossene Metallbereich und die zweite Verbindungszone dem ersten gegossenen Metallbereich und der ersten Verbindungszone der beschriebenen vorteilhaften Ausgestaltungen eines erfindungsgemäßen segmentierten Bauteils entsprechen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: einen Schnitt durch eine Querschnittsebene eines Ausführungsbeispiels eines Segments mit einem Formteil,
- FIG 2: einen Schnitt durch eine Querschnittsebene eines Ausführungsbeispiels eines segmentierten Bauteils,
- FIG 3: ein Detail des Ausführungsbeispiels des segmentierten Bauteils gemäß FIG 2,
- FIG 4: zeigt eine halbe Ansicht und einen halben Schnitt ein Ausführungsbeispiel einer Maschine,
- FIG 5: ein Ausführungsbeispiel eines Formteils,
- FIG 6: ein Ausführungsbeispiel einer ersten Gussform für ein Ausführungsbeispiel eines Verfahrens zur Herstellung eines segmentierten Bauteils,
- FIG 7: ein Ausführungsbeispiel einer zweiten Gussform für das Ausführungsbeispiel eines Verfahrens zur Herstellung eines segmentierten Bauteils.

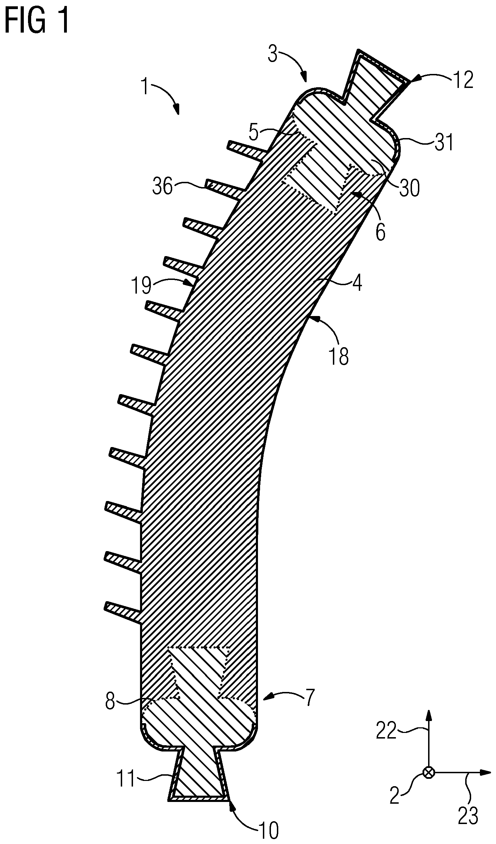

FIG 1 zeigt einen Schnitt durch eine Querschnittsebene eines Ausführungsbeispiels eines Segments 1 mit einem Formteil 3. Die Querschnittsebene ist an einer bestimmten axialen Position in der axialen Richtung 2 durch eine erste radiale Richtung 22 und eine zweite radiale Richtung 23 aufgespannt. Das Segment 1 ist ein erstes Segment 1 und das Formteil 3 ist ein erstes Formteil 3, wobei der erste gegossene Metallbereich 4 des ersten Segments 1 mit dem ersten Formteil 3 durch eine erste Verbindungszone 5 stoffschlüssig verbunden ist. Das erste Segment 1 erstreckt sich in eine axiale Richtung 2, die senkrecht zu der Querschnittsebene des Segments 1 verläuft. Das Segment 1 mit dem Formteil 3 weist in der Querschnittsebene eine Erstreckung auf, die sich von einem ersten Ende, an dem sich das erste Formteil 3 befindet, zu einem zweiten Ende erstreckt, an dem sich ein weiteres Formteil 7 befindet. Das weitere Formteil 7 ist durch eine vierte Verbindungszone 8 mit dem ersten Segment 1 stoffschlüssig verbunden. Das Segment 1 mit dem Formteil 3 weist an den freiliegenden Oberflächen des ersten Formteils 3 und des weiteren Formteils 7 eine Beschichtung 31, 11 auf. Das Segment 1 mit dem Formteil 3 hat im Wesentlichen in allen Querschnittsebenen des Segments 1 in der axialen Richtung 2 dieselbe Grundform. Die Grundform ist dabei durch einen im Wesentlichen in der axialen Richtung 2 parallelen Verlauf einer Kante 10 des weiteren Formteils 7 und einer Kante 12 des ersten Formteils 3 festgelegt. So können vorteilhaft kostengünstig in einer hohen Qualität das erste Segment 1 mit weiteren Segmenten verbunden werden, ohne allzu sehr auf die Vermeidung einer windschiefen Konstruktion achten zu müssen.

Eine Außenfläche 19 und eine Innenfläche 18 des ersten Segment 1, die eine Erstreckung in der axialen Richtung 2 und eine Erstreckung zwischen dem ersten Ende (an dem sich das erste Formteil 3 befindet) und dem zweiten Ende (an dem sich ein weiteres Formteil 7) aufweisen, können vorteilhaft kostengünstig in einer hohen Qualität durch Gießen, insbesondere durch Druckgießen, des ersten gegossenen Metallbereichs 4 in verschiedenen Querschnittsebenen des Segments 1 mit dem Formteil 3 eine unterschiedliche Gestalt aufweisen. So kann der gegossene Metallbereich 4 Rippen 36 an einer Außenfläche 19 des Segments 1 aufweisen.

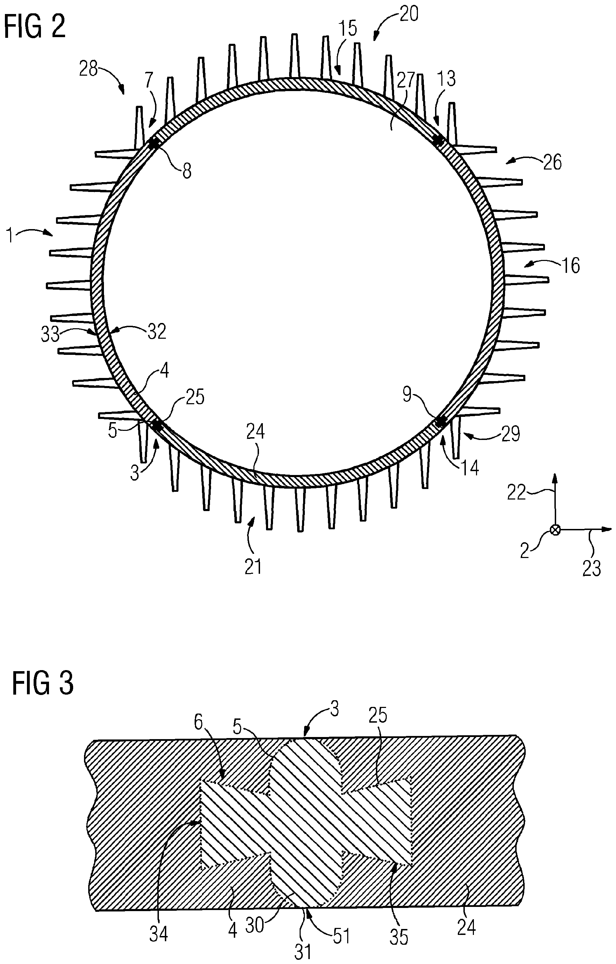

FIG 2 zeigt einen Schnitt durch eine Querschnittsebene eines Ausführungsbeispiels eines segmentierten Bauteils 20 für ein Gehäuse 41. Das segmentierte Bauteil 20 für das Gehäuse 41 umfasst das erste Segment 1 und ein zweites Segment 21, wobei sich das erste Segment 1 und das zweite Segment 21 in einer axialen Richtung 2 erstrecken, die senkrecht zu der Querschnittsebene des segmentierten Bauteils 20 verläuft. Das segmentierte Bauteil 20 weist das erste Formteil 3 auf, das sich in der axialen Richtung 2 erstreckt, wobei das erste Segment 1 einen ersten gegossenen Metallbereich 4 aufweist. Das zweite Segment 21 weist einen zweiten gegossenen Metallbereich 24 auf. Der erste gegossene Metallbereich 4 ist mit dem ersten Formteil 3 durch die erste Verbindungszone 5 stoffschlüssig verbunden. Das erste Formteil 3 ist mit dem zweiten gegossenen Metallbereich 24 durch eine zweite Verbindungszone 25 stoffschlüssig verbunden. In dem Ausführungsbeispiel des zugrundeliegenden Bauteils 20 besteht das erste Segment 1 aus dem ersten gegossenen Metallbereich 4 und das zweite Segment 21 besteht aus dem zweiten gegossenen Metallbereich 24. Die zwei weiteren Segmente des in Figur 2 gezeigten segmentierten Bauteils 20 bestehen ebenfalls aus gegossenen Metallbereichen. Alle gegossenen Metallbereiche sind aus Aluminium bzw. einer Aluminiumlegierung durch Druckgießen hergestellt worden.

Das segmentierte Bauteil 20 gibt durch das erste Segment 1, das erste Formteil 3, das zweite Segment 21 und ein weiteres Element 26 eine Erstreckung eines Innenraums 27 des Gehäuses 41 in der Querschnittsebene des Gehäuses 41 vor, wobei das weitere Element 26 durch eine dritte Verbindungszone 9 mit dem zweiten Segment 21 stoffschlüssig verbunden ist und durch eine vierte Verbindungszone 8 mit dem ersten Segment 1 stoffschlüssig verbunden ist. In dem Ausführungsbeispiel des segmentierten Bauteils 20 besteht das weitere Element 26 aus einem weiteren segmentierten Bauteil 13, 15, 16 und zwei weiteren Formteilen 7, 14, wobei eines 7 der weiteren Formteile 7, 14 durch die vierte Verbindungszone 8 mit dem ersten Segment 1 stoffschlüssig verbunden ist und das zweite 14 der weiteren Formteile 7, 14 durch die dritte Verbindungszone 9 mit dem zweiten Segment 21 stoffschlüssig verbunden ist. Dabei ist eines 7 der weiteren Formteile 7, 14 durch eine fünfte Verbindungszone mit einem weiteren Segment 15 an einem ersten Ende 28 des weiteren segmentierten Bauteils 13, 15, 16 stoffschlüssig verbunden und das zweite 14 der weiteren Formteile 7, 14 durch eine sechste Verbindungszone mit einem weiteren Segment 16 an einem zweiten Ende 29 des weiteren segmentierten Bauteils 13, 15, 16 stoffschlüssig verbunden. Das erste Ende 28 und das zweite Ende 29 bezieht sich dabei auf eine Erstreckung des weiteren segmentierten Bauteils 13, 15, 16 in der Querschnittsebene des weiteren erfindungsgemäßen segmentierten Bauteils 13, 15, 16. Das erste Segment 1 und das zweite Segment 21 legen die Form des segmentierten Bauteils 20 in der Querschnittsebene zwischen einem ersten Ende 28 und einem zweiten Ende 29 des segmentierten Bauteils 20 für das Gehäuse 41 fest. Alle Formteile 3, 7, 13, 14 des segmentierten Bauteils 20, d.h. das erste Formteil 3, die weiteren Formteil 7, 14 und ein Formteil des weiteren segmentierten Bauteils 13, 15, 16 weisen dieselbe Gestalt und dieselben Abmessungen auf und sind in großen Stückzahlen in einem Fertigungsprozess hergestellt worden. Die FIG 2 zeigt einen Schnitt durch die Querschnittsebene, die an einer bestimmten Position in der axialen Richtung 2 durch die erste radiale Richtung 22 und die zweite radiale Richtung 23 aufgespannt ist. In der Querschnittsebene des segmentierten Bauteils 20 sind Kräfte zwischen dem ersten Segment 1 und dem zweiten Segment 21 überwiegend von dem ersten gegossenen Metallbereich 4 aufnehmbar. Die Kräfte können in einer Richtung, die sich aus einer Kombination der axialen Richtung 2, der ersten radialen Richtung 22 und der zweiten radialen Richtung 23 ergibt, an dem ersten gegossenen Metallbereich 4 angreifen. Zwischen dem ersten Segment 1 und dem zweiten Segment 21 können Kräfte als Differenz zwischen verschiedenen Kräften, die an dem ersten Segment 1 und dem zweiten Segment 21 angreifen, auftreten. In dem Ausführungsbeispiel des segmentierten Bauteils 20 sind die Kräfte zwischen dem ersten Segment 1 und dem zweiten Segment 21 von dem ersten gegossenen Metallbereich aufnehmbar, da sich der gegossene Metallbereich 4 von einer Außenfläche 33 des segmentierten Bauteils 20 bis zu einer Innenfläche 32 des segmentierten Bauteils 20 erstreckt. Der erste gegossene Metallbereich 4 kann die Kräfte zwischen dem ersten Segment 1 und dem zweiten Segment 21 überwiegend aufnehmen, wenn der erste gegossene Metallbereich 4 sich über den größten Teil einer Strecke zwischen der Außenfläche 33 des segmentierten Bauteils 20 und der Innenfläche 32 des Bauteils 20 erstreckt. In der Querschnittsebene des segmentierten Bauteils 20 sind Kräfte zwischen dem ersten Segment 1 und dem zweiten Segment 21 überwiegend von dem ersten Formteil 3 aufnehmbar. Das erste Formteil 3 füllt hierfür überwiegend eine Strecke zwischen der Außenfläche 33 und der Innenfläche 32 des segmentierten Bauteils 20 aus. In dem Ausführungsbeispiel gemäß Figur 2 ist das erste Segment 21 nur über das Formteil 3 mit dem zweiten Segment 21 verbunden. So nimmt das erste Formteil 3 Kräfte in der Querschnittsebene des segmentierten Bauteils 20 zwischen dem ersten Segment 1 und dem zweiten Segment 21 vorteilhaft auf und es kann vorteilhaft kostengünstig in einer hohen Qualität eine Kräfte übertragende Verbindungseigenschaft zwischen dem ersten Segment 1 und dem zweiten Segment 21 eingestellt werden. Aufgrund der besseren Elastizität des ersten Formteils 3 gegenüber den gegossenen Metallbereichen der Segmente 1, 21, 15, 16 des segmentierten Bauteils 20 ist es vorteilhaft kostengünstig in einer hohen Qualität möglich, einen Stator einer erfindungsgemäßen Maschine in dem segmentierten Bauteil 20 zu fixieren. Dabei kann der Stator in den Innenraum 27 des Gehäuses 41 bzw. des segmentierten Bauteils 20 durch die bessere Elastizität des ersten Formteils 3 in einer hohen Qualität kostengünstig eingepresst werden und so eine bessere reibschlüssige Verbindung zwischen dem Stator und dem segmentierten Bauteil 20 bzw. dem Gehäuse 41 erreicht werden. Es wird somit vorteilhaft in dem Ausführungsbeispiel der Figur 2 durch die höhere Elastizität des ersten Formteils 3 gegenüber den gegossenen Metallbereichen eine Kräfte übertragende Verbindungseigenschaft zwischen dem ersten 1 und dem zweiten Segment 21, bzw. zwischen jeweils zwei Segmenten des segmentierten Bauteils 20, eingestellt.

FIG 3 zeigt ein Detail des Ausführungsbeispiels des segmentierten Bauteils 20 gemäß FIG 2. Das Detail zeigt einen Bereich um das erste Formteil 3 in einer vergrößerten Darstellung. Der erste gegossene Metallbereich 4 ist aus dem ersten Material durch Druckgießen gegossen. In der ersten Verbindungszone 5 ist das erste Formteil 3 durch das erste Material angeschmolzen. Das erste Formteil 3 weist ein zweites Material auf, das Aluminium aufweist. Die erste Verbindungszone 5 weist eine Legierung auf, wobei die Legierung das erste und das zweite Material aufweist. Das erste Formteil 3 weist in einem der ersten Verbindungszone 5 benachbarten Bereich 30 ein drittes Material auf. Das dritte Material ist in dem Ausführungsbeispiel des segmentierten Bauteils 20 Kupfer. Der benachbarte Bereich 30 erstreckt sich in einem inneren Teil des ersten Formteils 3, der vor einem Gießen des ersten gegossenen Metallbereichs 4 und des zweiten gegossenen Metallbereichs 24 durch eine Beschichtung an der Oberfläche 51 des ersten Formteils 3 umgeben wird. Zwischen dem ersten gegossenen Metallbereich 4 und dem ersten Formteil 3 ist entlang eines Abschnitts der Verbindungszone 5 ein Formschluss 6 vorhanden. Der Formschluss 6 erstreckt sich mindestens entlang der halben Länge der Verbindungszone 5, wobei die Länge der Verbindungszone 5 entlang einer Übergangsfläche 34 des ersten Formteils 3 auf einer dem ersten gegossenen Metallbereich 4 zugewandten Seite in der Querschnittsebene gemessen ist. Der Formschluss 6 weist eine schwalbenschwanzförmige Nut in dem ersten gegossenen Metallbereich 4 und einen schwalbenschanzförmigen Zapfen an dem ersten Formteil 3 auf. Das erste Formteil 3 weist eine dem zweiten gegossenen Metallbereich 24 zugewandte Seite auf, die mit dem zweiten gegossenen Metallbereich 24 durch die zweite Verbindungszone 25 stoffschlüssig verbunden ist. Der zweite gegossene Metallbereich 24 ist aus dem ersten Material durch Druckgießen gegossen. In der zweiten Verbindungszone 25 ist das erste Formteil 3 durch das erste Material angeschmolzen. Die zweite Verbindungszone 5 weist eine Legierung auf, wobei die Legierung das erste und das zweite Material aufweist. In dem Ausführungsbeispiel des segmentierten Bauteils 20 befindet sich zwischen der ersten Verbindungszone 5 und der zweiten Verbindungszone 25 an der Oberfläche 51 des ersten Formteils 3 ein Rest der Beschichtung 31. Letztere kann an der Außenfläche 33 und an der Innenfläche 32 des segmentierten Bauteils 20 das Formteil gegen Umwelteinflüsse schützen. Der Rest der Beschichtung 31 ist an der Außenfläche 33 und an der Innenfläche 31 noch vorhanden, da in diesem Ausführungsbeispiel des gegossenen Metallbereichs 20 das erste Material an diesen Stellen das erste Formteil nicht anschmelzen konnte.

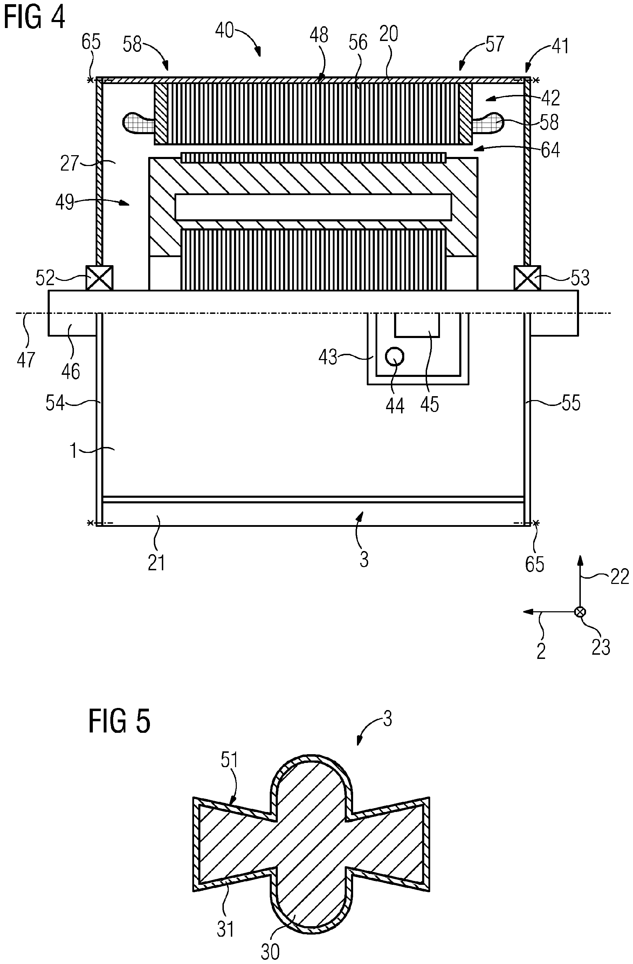

FIG 4 zeigt eine halbe Ansicht und einen halben Schnitt eines Ausführungsbeispiels einer Maschine 40. Der halbe Schnitt befindet sich oberhalb einer Drehachse 47. Die Maschine umfasst das Gehäuse 41 mit dem segmentierten Bauteil 20, wobei die Maschine 40 einen Stator 42 aufweist, der im segmentierten Bauteil 20 über eine reibschlüssige Verbindung zwischen mindestens einer Fläche 48 an einem äußeren Umfang des Stators 42 und einer Innenfläche 32 des segmentierten Bauteils 20 für einen Betrieb der Maschine 40 reibschlüssig fixiert ist. Der Stator 42 weist eine Grundform auf, die sich entlang der axialen Richtung 2 erstreckt, wobei sich die axiale Richtung 2 senkrecht zu einer Grundfläche der Grundform erstreckt. Die Grundform ist durch paralleles Verschieben der Grundfläche entlang der axiale Richtung 2 nachbildbar. Der äußere Umfang des Stator 42 ist in seiner Grundform durch eine Berandung der Grundfläche bei einem parallelen Verschieben der Grundfläche entlang der axiale Richtung 2 nachbildbar. Bei einem Betrieb der Maschine 40 wird ein Rotor 49 in Drehung um die Drehachse 47 versetzt, die sich entlang der axialen Richtung 2 erstreckt, und es kann an einer Welle 49, an der der Rotor 49 befestigt ist, mechanische Energie an einen mechanischen Verbraucher in Form einer Drehbewegung abgegeben werden. Die dabei auftretenden Kräfte führen zu Gegenkräften in dem Stator 42, der im segmentierten Bauteil 20 fixiert ist. Bei einem Betrieb der Maschine 40 kann auch der Maschine 40 mechanische Energie über die Welle 46 zugeführt werden, die auch zu entsprechenden Gegenkräften am Stator 42 führt. Bei der Maschine 40 ist die Welle 46 mithilfe einer ersten Lagervorrichtung 52 in einem ersten Lagerschild 54 und mithilfe einer zweiten Lagervorrichtung 53 in einem zweiten Lagerschild 55 gelagert sein. Das erste Lagerschild 54 und das zweite Lagerschild 55 legt eine Erstreckung des Gehäuses 41 in der axialen Richtung 2 fest. Das erste Lagerschild 54 und das zweite Lagerschild 55 sind an den axialen Enden des segmentierten Bauteils 20 befestigt.

Insbesondere vorteilhaft kann eine elektrische Maschine 40 vorteilhaft kostengünstig in einer hohen Qualität erfindungsgemäß zur Verfügung gestellt werden. Beim Betrieb der elektrischen Maschine 40 als Generator wird der Rotor 49 durch mechanische Energie in eine Drehung um die Drehachse 47 versetzt, die sich entlang der axialen Richtung 2 erstreckt. Durch ein magnetisches Zusammenwirken zwischen Rotor 49 und Stator 42 kann die mechanische Energie in elektrische Energie umgewandelt werden. Die elektrische Energie kann an einer Wicklung 50, die am Stator 42 befestigt ist, für einen elektrischen Verbraucher entnommen werden. Beim Betrieb einer erfindungsgemäßen elektrischen Maschine 40 als Motor wird über die Wicklung 50 elektrische Energie zugeführt und durch das magnetische Zusammenwirken zwischen Stator 42 und Rotor 49 elektrische Energie in mechanische Energie umgewandelt. Dabei wird der Rotor 49 in Drehung um die Drehachse 47 versetzt und es kann an einer Welle 46 mechanische Energie an einen mechanischen Verbraucher in Form einer Drehbewegung abgegeben werden. Der Rotor 49 ist an der Welle 46 befestigt. Vorteilhaft kann bei einer erfindungsgemäßen elektrischen Maschine der Stator 42 in den Innenraum 27 des Gehäuses 41 bzw. des segmentierten Bauteils 20 durch die bessere Elastizität des ersten Formteils 3 in einer hohen Qualität kostengünstig mit geringen Veränderungen in den für das magnetische Zusammenwirken des Stators mit dem Rotor maßgeblichen Eigenschaften des Stators 42 eingepresst werden. Zusätzlich vorteilhaft kann Druckgießen durch eine höhere Genauigkeit der Abmessungen des Innenraums 27 diese Vorteile verstärken.

Der Stator 42 weist ein Blechpaket auf, das in der axialen Richtung 2 von einem ersten axialen Ende 57 bis zu einem zweiten axialen Ende 58 des Stators 42 geschichtete Bleche 56 umfasst. Die in der axialen Richtung 2 geschichteten Bleche 56 dienen zur Führung des magnetischen Flusses in einem Betrieb einer elektrischen Maschine 40. Der Rotor 49 weist eine Einrichtung auf, um über den Luftspalt 64 mit dem Stator 42, insbesondere mit der am Stator 42 befestigten Wicklung, magnetisch zusammenwirken zu können. In dem Ausführungsbeispiel der elektrischen Maschine 40 ist die Einrichtung eine Kurzschlusswicklung, die Leiter eines zweiten Materials, das Kupfer ist, aufweist. Der Rotor 49 der elektrischen Maschine 40 ist so ein Käfigläufer. Das erste Lagerschild 54 und das zweite Lagerschild 55 sind an den axialen Enden des segmentierten Bauteils 20 befestigt. Die Befestigung des ersten Lagerschild 54 und des zweiten Lagerschilds 55 an den axialen Enden des segmentierten Bauteils 20 erfolgt in dem Ausführungsbeispielen mit Schrauben 65 als Befestigungselemente.

Unterhalb der Drehachse 47 ist in FIG 4 eine halbe Ansicht der elektrischen Maschine 40 von außen zu sehen. Es sind die Außenflächen des ersten Segments 1 und des zweiten Segments 21, sowie das erste Formteil 3 zu sehen. Die Außenfläche der Maschine 40 weist so Rippen 36 als Kühlrippen auf, die Bestandteile des ersten Segments 1 und des zweiten Segments 21 sind. Die Rippen 36 sind in Figur 4 nicht dargestellt. In Figur 4 ist zu sehen, dass das erste Segment 1 Wände 43 eines Klemmenkastens, eine Bohrung 44 und einen Durchgang 45 in den Innenraum 27 der elektrischen Maschine 40 aufweist. Die Bohrung 44 dient zur Befestigung von Klemmenkastenelementen. Die Wände 43 des Klemmenkastens, die Bohrung 44 und der Durchgang 45 sind einstückig mit dem Segment 1 verbunden. Das Segment 1, die Wände 43 des Klemmenkastens, die Bohrung 44 und der Durchgang 45 sind in einem Stück durch Druckgießen hergestellt worden.

FIG 5 zeigt ein Ausführungsbeispiel eines Formteils, wobei das Formteil das erste Formteil 3 ist. Für die Herstellung des ersten Formteils 3 wurde ein Umformverfahren angewendet, z.B. Strangpressen, um die geeignete Form des ersten Formteils 3 zu erhalten. Durch das Umformverfahren hat das erste Formteil 3 gegenüber den gegossenen Metallbereichen ein feineres Gefüge. Das erste Formteil 3 besteht überwiegend aus einem dritten Material, das in dem Ausführungsbeispiel Kupfer ist. Auf der Oberfläche 51 des ersten Formteils 3 ist ein weiteres Material durch Beschichten mit einem Beschichtungsverfahren angebracht, wie dies in der Patentanmeldung mit der Veröffentlichungsnummer EP 2396872 A1 für Leiter eines zweiten Materials beschrieben ist. Das erste Formteil 3 weist eine metallische Beschichtung 31 mit dem weiteren Material auf. So kann die erste Verbindungszone 5 des Ausführungsbeispiels des segmentierten Bauteils 20 oder des Segments 1 mit dem Formteil 3 eine Legierung aufweisen, wobei die Legierung das erste Material und ein zweite Material aufweist, wobei das zweite Material das weitere Material ist. Die Beschichtung 31 des ersten Formteils 3 umgibt einen inneren Bereich, der aus einem Stück eines Materials ist, das als Ausgangspunkt für eine Herstellung des ersten Formteils 3 verwendet wurde. Das erste Formteil 3 besteht so überwiegend aus diesem Material, das in dem Ausführungsbeispiel Kupfer ist. Dieses Material ist das dritte Material. Der innere Bereich entspricht im Wesentlichen bei dem Ausführungsbeispiel des segmentierten Bauteils 20 bzw. des Segments 1 mit dem Formteil 3 dem der ersten Verbindungszone 5 benachbarten Bereich 30.

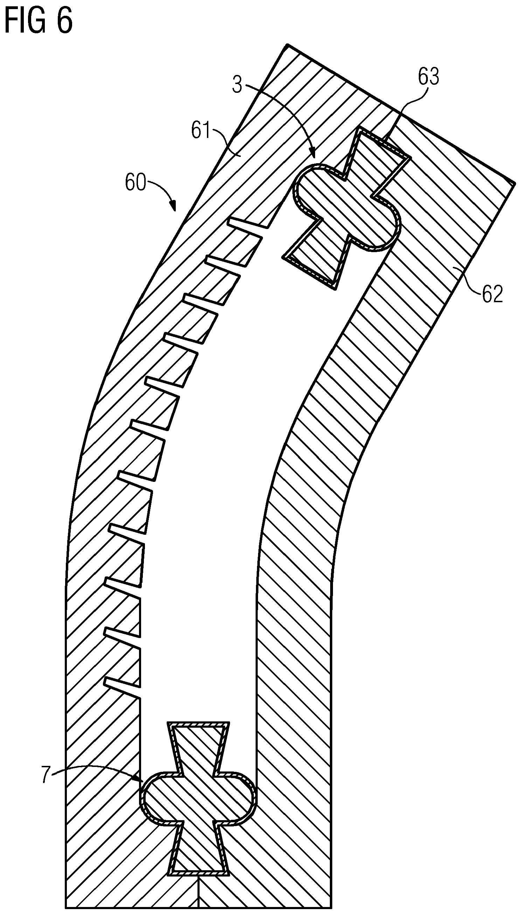

FIG 6 zeigt ein Ausführungsbeispiel einer ersten Gussform 60 für ein Ausführungsbeispiel eines Verfahrens zur Herstellung eines segmentierten Bauteils 20. Bei einem solchen Ausführungsbeispiel werden für die Herstellung eines Segments mit einem Formteil das erste Formteil 3 und ein weiteres Formteil 7 in die erste Gussform 60 eingelegt. Anschließend wird zum Gießen des ersten gegossenen Metallbereichs ein nach dem Einlegen des ersten Formteils 3 und des weiteren Formteils 7 verbleibender Freiraum durch Druckgießen mit dem ersten Material ausgefüllt. In dem Ausführungsbeispiel der ersten Gussform 60 gemäß Figur 6 kann das Segment mit dem Formteil nach einem Trennen einer ersten Hälfte 61 der ersten Gussform 60 von einer zweiten Hälfte 62 der ersten Gussform 60 an einer Trennstelle 63 entnommen werden. Mithilfe der ersten Gussform 60 kann so vorteilhaft kostengünstig in einer hohen Qualität ein Segment mit einem Formteil hergestellt werden, das an allen Verbindungsstellen zum Verbinden mit dem zweiten und weiteren Segmenten jeweils ein Formteil aufweist.

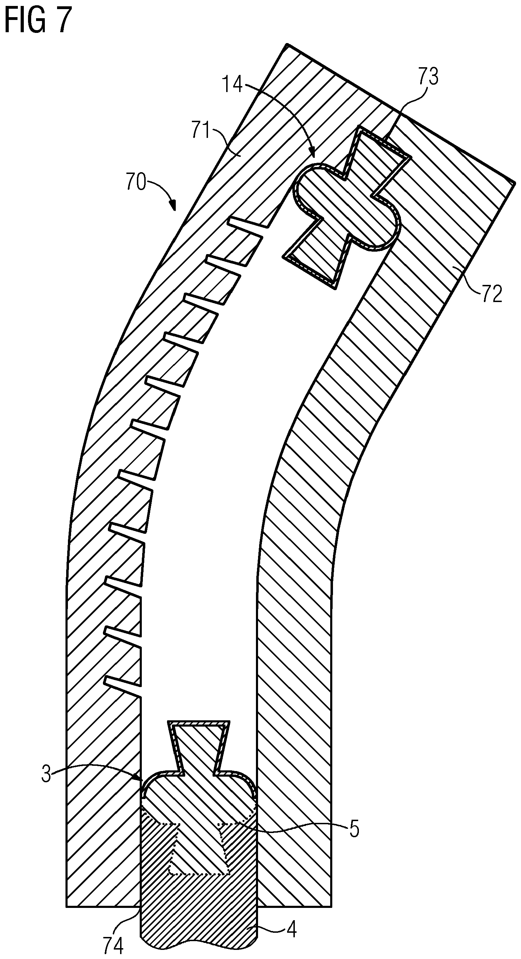

FIG 7 zeigt ein Ausführungsbeispiel einer zweiten Gussform 70 für das Verfahren zur Herstellung eines segmentierten Bauteils 22. Hierzu werden ein weiteres Formteil 14 und ein Segment mit dem ersten gegossenen Metallbereich 4 und dem ersten Formteil 3 in die zweite Gussform 70 eingelegt, wobei der gegossene Metallbereich 4 nur teilweise an einer Öffnung 74 mit dem ersten Formteil 3 in die zweite Gussform 70 hineinragt. Zum Gießen des zweiten Metallbereichs 24 wird ein noch verbleibender Freiraum in der zweiten Gussform 70 durch Druckgießen mit dem ersten Material ausgefüllt. Bei dem Ausführungsbespiel der zweiten Gussform 70 kann nach dem Erstarren des ersten Materials durch Trennen der ersten Hälfte 71 der zweiten Gussform 70 von der zweiten Hälfte 72 der zweiten Gussform 70 an einer Trennstelle 73 ein segmentiertes Bauteil entnommen werden, das ein erstes Segment mit dem gegossenen Metallbereich 4 umfasst und ein zweites Segment mit einem zweiten gegossenen Metallbereich, sowie drei Formteile 7, 3 und 14. Vorteilhaft können weitere Segmente durch weiterer Verfahrensschritte, die die zweite Gussform 70 wie beschrieben verwenden, zum segmentierten Bauteil hinzugefügt werden. Für geschlossene Bauteile, wie z.B. das segmentierte Bauteil 20 gemäß FIG 2 für das Gehäuse 41 einer Maschine 40 gemäß FIG 4 werden bei einem Verfahren zur Herstellung eines segmentierten Bauteils zwei offene Enden des segmentierten Bauteils 20, die je ein Formteil aufweisen, in eine dritte Gussform eingelegt und durch das Ausfüllen des verbleibenden Freiraums in der Gussform durch Druckgießen ein weiteres Segment hergestellt. Die Segmente und Formteile des so hergestellten Bauteils geben eine Erstreckung eines Innenraums eines Gehäuses in einer Querschnittsebene des Gehäuses vor. Vorteilhaft kostengünstig in einer hohen Qualität müssen die erste Gussform, die zweite Gussform und gegebenenfalls eine dritte Gussform nur Abmessungen aufweisen, die für die Herstellung Segments ausreichend sind.

Obwohl die Erfindung im Detail durch die bevorzugten Ausführungsbeispiele näher beschrieben wurde, ist sie nicht durch die offenbarten Beispiele eingeschränkt und andere Variationen können vom Fachmann durchaus abgeleitet werden, ohne den Schutzumfang der Erfindung zu verlassen, der durch die Ansprüche definiert ist.

## Patentansprüche

1. Segmentiertes Bauteil (20) für ein Gehäuse (41), wobei das segmentierte Bauteil (20) ein erstes Segment (1) und ein zweites Segment (21) umfasst,
**dadurch gekennzeichnet, dass**
- das segmentierte Bauteil (20) ein erstes Formteil (3) aufweist,
- wobei das erste Segment (1) einen ersten gegossenen Metallbereich (4) aufweist,
- wobei das zweite Segment (21) einen zweiten gegossenen Metallbereich (24) aufweist,
- wobei der erste gegossene Metallbereich (4) mit dem ersten Formteil (3) durch eine erste Verbindungszone (5) und das erste Formteil (3) mit dem zweiten gegossenen Metallbereich (24) durch eine zweite Verbindungszone (25) stoffschlüssig verbunden sind,
- wobei das segmentierte Bauteil (20) durch das erste Segment (1), das erste Formteil (3), das zweite Segment (21) und mindestens ein weiteres Element (26) eine Erstreckung eines Innenraums (27) des Gehäuses (41) in einer Querschnittsebene des Gehäuses (41) vorgibt, wobei das weitere Element (26) durch eine dritte Verbindungszone (9) mit dem zweiten Segment (21) stoffschlüssig verbunden ist und durch eine vierte Verbindungszone (8) mit dem ersten Segment (1) stoffschlüssig verbunden ist.

2. Segmentiertes Bauteil (20) nach Anspruch 1, wobei der erste gegossene Metallbereich (4) aus einem ersten Material, insbesondere durch Druckgießen, gegossen ist und in der ersten Verbindungszone (5) das erste Formteil (3) durch das erste Material angeschmolzen ist.

3. Segmentiertes Bauteil (20) nach Anspruch 1 oder 2, wobei das erste Formteil (3) ein zweites Material aufweist und die erste Verbindungszone (5) eine Legierung aufweist, wobei die Legierung das erste und das zweite Material aufweist.

4. Segmentiertes Bauteil (20) nach Anspruch 3, wobei alle gegossenen Metallbereiche aus Aluminium oder einer Aluminiumlegierung durch Druckgießen hergestellt sind, wobei das zweite Material Aluminium aufweist.

5. Segmentiertes Bauteils nach Anspruch 3 oder 4, wobei das erste Formteil (3) in einem der ersten Verbindungszone (5) benachbarten Bereich (30) ein drittes Material aufweist.

6. Segmentiertes Bauteil (20) nach Anspruch 5, wobei das Formteil (3) überwiegend aus dem dritten Material besteht, das Kupfer ist.

7. Segmentiertes Bauteil (20) nach einem der vorhergehenden Ansprüche, wobei zwischen dem ersten gegossenen Metallbereich (4) und dem ersten Formteil (3) entlang eines Abschnitts der ersten Verbindungszone (5) ein Formschluss (6) vorhanden ist.

8. Segmentiertes Bauteil (20) nach einem der vorhergehenden Ansprüche, wobei das erste Formteil (3) eine Struktur zur Vergrößerung einer Übergangsfläche des ersten Formteils (3) auf einer dem ersten gegossenen Metallbereich (4) zugewandten Seite aufweist.

9. Segmentiertes Bauteil (20) nach einem der vorhergehenden Ansprüche, wobei das erste Segment (1) und das zweite Segment (21) die Form des segmentierten Bauteils (20) in einer Querschnittsebene zwischen einem ersten Ende (28) und einem zweiten Ende (29) des segmentierten Bauteils (20)festlegt.

10. Segmentiertes Bauteil (20) nach einem der Ansprüche 1 bis 8, wobei das erste Segment (1) und das zweite Segment (21) die Form des segmentierten Bauteils (20) in einer Querschnittsebene zwischen einem ersten Ende (28) und einem zweiten Ende (29) des segmentierten Bauteils (20) durch den ersten gegossenen Metallbereich (4) und dem zweiten gegossenen Metallbereich (24) festlegt.

11. Segmentiertes Bauteil (20) nach einem der Ansprüche 1 bis 8, wobei alle gegossenen Metallbereiche die Form des segmentierten Bauteils (20) in einer Querschnittsebene des segmentierten Bauteils (20) festlegen.

12. Segmentiertes Bauteil (20) nach einem der vorhergehenden Ansprüche, wobei das mindestens eine weitere Element genau ein weiteres Element ist, das aus einem zweiten Formteil besteht.

13. Segmentiertes Bauteil (20) nach einem der Ansprüche 1 bis 11, wobei das mindestens eine weitere Element (26) aus mehreren weiteren Elementen besteht, wobei die weiteren Elemente mindestens ein Segment (15, 16) und mindestens zwei Formteile (7, 13, 14) sind, wobei das mindestens eine Segment (15, 16) einen gegossenen Metallbereich aufweist.

14. Maschine (40), insbesondere elektrische Maschine, umfassend ein segmentierten Bauteil (20) nach einem der Ansprüche 1 bis 13, wobei die Maschine (40) einen Stator (42) aufweist, der im segmentierten Bauteil (20) über eine reibschlüssige Verbindung zwischen mindestens einer Fläche (48) an einem äußeren Umfang des Stators (42) und einer Innenfläche (32) des segmentierten Bauteils (20) für einen Betrieb der Maschine (40) reibschlüssig fixiert ist.

15. Verfahren zur Herstellung eines segmentierten Bauteils (20) für ein Gehäuse (41) nach einem der Ansprüche 1 bis 13, wobei der erste gegossene Metallbereich (4) mit dem ersten Formteil (3) durch eine erste Verbindungszone (5) stoffschlüssig verbunden wird, und der zweite gegossene Metallbereich (24) stoffschlüssig mit dem ersten Formteil (3) durch eine zweite Verbindungszone (25) verbunden wird, wobei mit einer Gussform zwei offene Enden (28,29) des segmentierten Bauteils (20) durch Gießen eines gegossenen Metallbereichs stoffschlüssig verbunden werden, wobei das segmentierte Bauteil (20) durch das erste Segment (1), das erste Formteil (3), das zweite Segment (21) und mindestens ein weiteres Element (26) eine Erstreckung eines Innenraums (27) des Gehäuses (41) in einer Querschnittsebene des Gehäuses (41) vorgibt, wobei das weitere Element (26) durch eine dritte Verbindungszone (9) mit dem zweiten Segment (21) stoffschlüssig verbunden ist und durch eine vierte Verbindungszone (8) mit dem ersten Segment (1) stoffschlüssig verbunden ist.

16. Verwendung eines Formteils (3) für ein segmentiertes Bauteil (20) für ein Gehäuse (41) nach einem der Ansprüche 1 bis 13, wobei das Formteil (3) als erstes Formteil (3) zum stoffschlüssigen Verbinden des ersten gegossenen Metallbereichs (4) mit dem ersten Formteil (3) durch eine erste Verbindungszone (5) und zum stoffschlüssigen Verbinden des ersten Formteils (3) mit dem zweiten gegossenen Metallbereich (24) durch eine zweite Verbindungszone (25) verwendet wird, wobei das segmentierte Bauteil (20) durch das erste Segment (1), das erste Formteil (3), das zweite Segment (21) und mindestens ein weiteres Element (26) eine Erstreckung eines Innenraums (27) des Gehäuses (41) in einer Querschnittsebene des Gehäuses (41) vorgibt, wobei das weitere Element (26) durch eine dritte Verbindungszone (9) mit dem zweiten Segment (21) stoffschlüssig verbunden ist und durch eine vierte Verbindungszone (8) mit dem ersten Segment (1) stoffschlüssig verbunden ist.

## Claims

1. Segmented component (20) for a housing (41), wherein the segmented component (20) comprises a first segment (1) and a second segment (21),
**characterised in that**
- the segmented component (20) has a first shaped part (3),
- wherein the first segment (1) has a first cast metal region (4),
- wherein the second segment (21) has a second cast metal region (24),
- wherein the first cast metal region (4) is material-bonded to the first shaped part (3) by means of a first bonding zone (5) and the first shaped part (3) is material-bonded to the second cast metal region (24) by means of a second bonding zone (25),
- wherein the segmented component (20) indicates an extension of an interior space (27) of the housing (41) on a cross-sectional plane of the housing (41) by means of the first segment (1), the first shaped part (3), the second segment (21) and at least one additional element (26), wherein the additional element (26) is material-bonded to the second segment (21) by means of a third bonding zone (9) and is material-bonded to the first segment (1) by a fourth bonding zone (8).

2. Segmented component (20) according to claim 1, wherein the first cast metal region (4) is cast from a first material, in particular by means of pressure die-casting, and the first shaped part (3) is fused in the first bonding zone (5) by means of the first material.

3. Segmented component (20) according to claim 1 or 2, wherein the first shaped part (3) has a second material and the first bonding zone (5) has an alloy, wherein the alloy has the first and the second material.

4. Segmented component (20) according to claim 3, wherein all the cast metal regions are made of aluminium or an aluminium alloy by means of pressure die-casting, wherein the second material has aluminium.

5. Segmented component according to claim 3 or 4, wherein the first shaped part (3) has a third material in a region (30) adjacent to the first bonding zone (5).

6. Segmented component (20) according to claim 5, wherein the shaped part (3) mainly consists of the third material, which is copper.

7. Segmented component (20) according to one of the preceding claims, wherein between the first cast metal region (4) and the first shaped part (3) a form closure (6) is present along a section of the first bonding zone (5).

8. Segmented component (20) according to one of the preceding claims, wherein the first shaped part (3) has a structure for the enlargement of a transition area of the first shaped part (3) on a side facing the first cast metal region (4).

9. Segmented component (20) according to one of the preceding claims, wherein the first segment (1) and the second segment (21) establishes the shape of the segmented component (20) on a cross-sectional plane between a first end (28) and a second end (29) of the segmented component (20).

10. Segmented component (20) according to one of claims 1 to 8, wherein the first segment (1) and the second segment (21) establishes the shape of the segmented component (20) on a cross-sectional plane between a first end (28) and a second end (29) of the segmented component (20) through the first cast metal region (4) and the second cast metal region (24).

11. Segmented component (20) according to one of claims 1 to 8, wherein all the cast metal regions establish the shape of the segmented component (20) on a cross-sectional plane of the segmented component (20).

12. Segmented component (20) according to one of the preceding claims, wherein the at least one additional element is precisely one additional element consisting of a second shaped part.

13. Segmented component (20) according to one of claims 1 to 11, wherein the at least one additional element (26) consists of additional elements, wherein the additional elements are at least one segment (15,16) and at least two shaped parts (7,13,14), wherein the at least one segment (15,16) has a cast metal region.

14. Machine (40), in particular an electric machine, comprising a segmented component (20) according to one of claims 1 to 13, wherein the machine (40) has a stator (42) which is frictionally fixed in the segmented component (20) by way of a frictional bond between at least one surface (48) on an outer periphery of the stator (42) and an internal surface (32) of the segmented component (20) for the operation of the machine (40).

15. Method for manufacturing a segmented component (20) for a housing (41) according to one of claims 1 to 13, wherein the first cast metal region (4) with the first shaped part (3) is material-bonded by means of a first bonding zone (5), and the second cast metal region (24) is material-bonded to the first shaped part (3) by means of a second bonding zone (25), wherein with a casting mould two open ends (28, 29) of the segmented component (20) are material-bonded by means of casting of a cast metal region, wherein the segmented component (20) indicates an extension of an interior space (27) of the housing (41) on a cross-sectional plane of the housing (41) by means of the first segment (1), the first shaped part (3), the second segment (21) and at least one additional element (26), wherein the additional element (26) is material-bonded to the second segment (21) by a third bonding zone (9) and is material-bonded to the first segment (1) by a fourth bonding zone (8).

16. Use of a shaped part (3) for a segmented component (20) for a housing (41) according to one of claims 1 to 13, wherein the shaped part (3) is used as the first shaped part (3) for material-bonding of the first cast metal region (4) to the first shaped part (3) by means of a first bonding zone (5) and for material-bonding of the first shaped part (3) to the second cast metal region (24) by means of a second bonding zone (25), wherein the segmented component (20) indicates an extension of an interior space (27) of the housing (41) on a cross-sectional plane of the housing (41) by means of the first segment (1), the first shaped part (3), the second segment (21) and at least one additional element (26), wherein the additional element (26) is material-bonded to the second segment (21) by a third bonding zone (9) and is material-bonded to the first segment (1) by a fourth bonding zone (8).

## Revendications

1. Pièce (20) segmentée pour une enveloppe (41), la pièce (20) segmentée comprenant un premier segment (1) et un deuxième segment (21),
**caractérisée en ce que**
- la pièce (20) segmentée a une première pièce (3) moulée,
- dans laquelle le premier segment (1) a une première partie (4) métallique coulée,
- dans laquelle le deuxième segment (21) a une deuxième partie (24) métallique coulée,
- dans laquelle la première partie (4) métallique coulée est reliée à coopération de matière à la première pièce (3) moulée par une première zone (5) de liaison et la première pièce (3) moulée est reliée à coopération de matière à la deuxième partie (24) métallique coulée par une deuxième zone (25) de liaison,
- dans laquelle la pièce (20) segmentée prescrit par le premier segment (1), la première pièce (3) moulée, le deuxième segment (21) et au moins un autre élément (26), une étendue d'un espace (27) intérieur de l'enveloppe (41) dans un plan de section transversale de l'enveloppe (41), l'autre élément (26) étant relié à coopération de matière au deuxième segment (21) par une troisième zone (9) de liaison et étant relié à coopération de matière au premier segment (1) par une quatrième zone (8) de liaison.

2. Pièce (20) segmentée suivant la revendication 1, dans laquelle la première partie (4) métallique coulée est coulée en un premier matériau, notamment par coulée sous pression, et, dans la première zone (5) de liaison, la première pièce (3) moulée est fondue par le premier matériau.

3. Pièce (20) segmentée suivant la revendication 1 ou 2, dans laquelle la première pièce (3) moulée a un deuxième matériau et la première zone (5) de liaison a un alliage, l'alliage ayant le premier et le deuxième matériaux.

4. Pièce (20) segmentée suivant la revendication 3, dans laquelle toutes les parties métalliques coulées sont fabriquées par coulée sous pression, en aluminium ou en un alliage d'aluminium, le deuxième matériau ayant de l'aluminium.

5. Pièce (20) segmentée suivant la revendication 3 ou 4, dans laquelle la première pièce (3) moulée a un troisième matériau dans une partie (30) voisine de la première zone (5) de liaison.

6. Pièce (20) segmentée suivant la revendication 5, dans laquelle la pièce (3) moulée est, d'une manière prépondérante, en le troisième matériau, qui est du cuivre.

7. Pièce (20) segmentée suivant l'une des revendications précédentes, dans laquelle il y a, entre la première partie (4) métallique coulée et la première pièce (3) moulée, une liaison (6) à complémentarité de forme le long d'une partie de la première zone (5) de liaison.

8. Pièce (20) segmentée suivant l'une des revendications précédentes, dans laquelle la première pièce (3) moulée a une structure pour l'agrandissement d'une surface de transition de la première pièce (3) moulée d'un côté tourné vers la première partie (4) métallique coulée.

9. Pièce (20) segmentée suivant l'une des revendications précédentes, dans laquelle le premier segment (1) et le deuxième segment (21) fixent la forme de la pièce (20) segmentée dans un plan de section transversale entre une première extrémité (28) et une deuxième extrémité (29) de la pièce (20) segmentée.

10. Pièce (20) segmentée suivant l'une des revendications 1 à 8, dans laquelle le premier segment (1) et le deuxième segment (21) fixent, par la première partie (4) métallique coulée et la deuxième partie (24) métallique coulée, la forme de la pièce (20) segmentée dans un plan de section transversale entre une première extrémité (28) et un deuxième extrémité (29) de la pièce (20) segmentée.

11. Pièce (20) segmentée suivant l'une des revendications 1 à 8, dans laquelle toutes les parties métalliques coulées fixent la forme de la pièce (20) segmentée dans un plan de section transversale de la pièce (20) segmentée.

12. Pièce (20) segmentée suivant l'une des revendications précédentes, dans laquelle le au moins un autre élément est exactement un autre élément, qui est constitué d'une deuxième pièce moulée.

13. Pièce (20) segmentée suivant l'une des revendications 1 à 11, dans laquelle le au moins un autre élément (26) est constitué de plusieurs autres éléments, les autres éléments étant au moins un segment (15, 16) et au moins deux pièces (7, 13, 14) moulées, le au moins un segment (15, 16) ayant une partie métallique coulée.

14. Machine (40), notamment machine électrique, comprenant une pièce (20) segmentée suivant l'une des revendications 1 à 13, la machine (40) ayant un stator (42), qui est, pour un fonctionnement de la machine (40), immobilisé à frottement dans la pièce (20) segmentée par une liaison à frottement entre au moins une surface (48) sur un pourtour extérieur du stator (42) et une surface (32) intérieure de la pièce (20) segmentée.

15. Procédé de fabrication d'une pièce (20) segmentée pour une enveloppe (41) suivant l'une des revendications 1 à 13, dans lequel on relie à coopération de matière la première partie (4) métallique coulée à la première pièce (3) moulée par une première zone (5) de liaison et on relie la deuxième partie (24) métallique coulée, à coopération de matière, à la première pièce (3) moulée, par une deuxième zone (25) de liaison, dans lequel, par un moule de coulée, on relie, à coopération de matière, deux extrémités (28, 29) ouvertes de la pièce (20) segmentée par coulée d'une partie métallique coulée, dans lequel la pièce (20) segmentée prescrit, dans un plan de section transversale de l'enveloppe (41), par le premier segment (1), la première pièce (3) moulée et le deuxième segment (21) et au moins un autre élément (26), une étendue d'un espace (27) intérieur de l'enveloppe (41), dans lequel on relie, à coopération de matière, l'autre élément (26) au deuxième élément (21) par une troisième zone (9) de liaison et par une quatrième zone (8) de liaison au premier segment (1).

16. Utilisation d'une pièce (3) moulée pour une pièce (20) segmentée pour une enveloppe (41) suivant l'une des revendications 1 à 13, dans laquelle on utilise la pièce (3) moulée comme première pièce (3) moulée pour la liaison, à coopération de matière, de la première partie (4) métallique coulée à la première pièce (3) moulée, par une première zone (5) de liaison et pour la liaison à coopération de matière, de la première pièce (3) moulée à la deuxième partie (24) métallique coulée, par une deuxième zone (25) de liaison, dans laquelle la pièce (20) segmentée prescrit, dans un plan de section transversale de l'enveloppe (41), par le premier segment (1), la première pièce (3) moulée, le deuxième segment (21) et au moins un autre élément (26), une étendue d'un espace (27) intérieur de l'enveloppe (41), l'autre élément (26) étant relié, à coopération de matière, au deuxième segment (21) par une troisième zone (9) de liaison et par une quatrième zone (8) de liaison étant relié, à coopération de matière, au premier segment (1).
